# EUROPEAN PATENT SPECIFICATION

(11) **EP 3 942 211 B1**
(45) Date of publication and mention of the grant of the patent: **20.12.2023**
(21) Application number: 20718370.8
(22) Date of filing: 16.03.2020
(51) Int. Cl.: F16L 37/091, F16L 37/14, F16L 37/092

(54) **DEVICE FOR CONNECTING A TUBE TO A SEAT**
VORRICHTUNG ZUM VERBINDEN EINES ROHRES MIT EINEM SITZ
DISPOSITIF DESTINÉ À RELIER UN TUBE À UN SIÈGE

(30) Priority: 18.03.2019 IT 201900003879
(43) Date of publication of application: 26.01.2022
(73) Proprietor: SABAF S.p.A., 25035 Ospitaletto (BS) (IT)
(72) Inventor: DORA, Massimo, 25035 Ospitaletto (BS) (IT)
(74) Representative: Marietti, Andrea
(86) International application number: PCT/IB2020/052383
(87) International publication number: WO 2020/188465

(56) References cited:
- EP-A1- 0 378 035
- FR-A1- 2 941 028
- US-A- 3 490 795
- US-A- 3 625 551
- US-A1- 2011 068 573
- US-A1- 2014 007 407

## Description

### FIELD OF THE INVENTION

The present invention concerns the connection of a tube to a seat, wherein the tube is partially inserted in such seat, for example the connection of a tube in a seat of a gas burner tap.

### KNOWN PRIOR ART

In particular, couplings between the tube and seat by means of reversible connections, such as couplings connected to two elements by means of threaded elements or the like are known Such known couplings are disclosed in EP 0 378 035 A1, US 2014/007407 A1 and US 2011/068573 A1.

The mounting of the tube to the seat is thus complex and lengthy to carry out. Similarly, it is complex to remove the tube from the seat whenever necessary. Object of the present invention is thus to solve the problems of the known art described above.

Particular object of the present invention is to achieve a quick and effective connection that is simultaneously easy to implement.

### SUMMARY OF THE INVENTION

These and other objects are solved by the present invention by means of a device and an assembly according to one or more of the accompanying claims.

In particular, object of the present invention are a device and an assembly according to the accompanying independent claims. Preferred aspects are specified in the dependent claims.

An aspect of the invention concerns a device for connecting a tube to a seat, by inserting at least a portion of the tube in the seat; the device comprises an elastic element adapted to be coupled to the outer surface of the tube portion adapted to be inserted in the seat, the elastic element being alternatively displaceable at least in a tube holding position, in which the elastic element prevents or hinders the removal of the tube from the seat; and in a tube releasing position, in which the elastic element allows the removal of the tube from the seat.

The elastic element thus allows to quickly couple the tube to the respective seat, simultaneously ensuring the coupling of the pieces.

In the holding position, the elastic element typically couples with the tube by interference, so that to hold it within the respective seat. In the releasing position, the elastic element can be decoupled from the tube, or can stay coupled therewith in a loose way, so that to allow a simple disengagement of the tube from the seat.

In other words, in the holding position, the elastic element exerts a force on the tube such as to prevent, or hinder, the removal of the tube itself from the seat. In the releasing position, the elastic element exerts zero force, or a force anyhow less that the force exerted in the holding position, so that not to hinder, or to exert a reduced hindrance against, the removal of the tube from the seat.

The device comprises a first bushing couplable with a tube having outer diameter substantially equal to the inner diameter of the bushing, and couplable to a second bushing by at least partially inserting the first bushing inside the second bushing. One of the bushings comprises the elastic element, while the other bushing comprises an actuator element actuating the elastic element. Such actuator element is configured so that the movement of the first bushing inside the second bushing alternatively causes the engagement and disengagement between the elastic element and the actuator element, so that to alternatively define the aforesaid holding position and releasing position depending on the relative position between the first and second bushings.

In other words, the two bushings couple to one another, and the bushings coupled to one another in turn are constrained to the tube and seat. In particular, the interaction between the actuator element and the elastic element alternatively defines the mentioned holding and releasing positions, i.e. selectively causes the holding and releasing of the tube with respect to the seat.

According to a possible aspect, the elastic element comprises a plurality of teeth arranged so that to be coupled to the tube by interference. The coupling between the actuator element and the teeth causes the deformation of the teeth. As better discussed hereunder, according to a possible aspect, the teeth can be deformed so that to be pushed against the tube inserted in the respective bushing. In such case, the coupling between the actuator element and teeth occurs in the mentioned "holding position," whereby the coupling between the teeth and the tube substantially makes the bushings integral with the tube. When the actuator element and the teeth are decoupled, the teeth move away from the tube and are decoupled therefrom, or anyhow create a loose coupling between the teeth and tube which allows to easily release the tube from the bushings. Instead, according to an alternative solution, it is possible that the tube is inserted in the bushings, so that the teeth grab thereon, while the coupling between the actuator element and the teeth causes the disengagement (or anyhow the formation of a loose coupling) between tube and bushings.

According to the invention, the second bushing comprises a reversible coupling element for reversibly coupling to the first bushing. Such reversible coupling element is preferably elastic. The coupling element is configured as elastic lugs at least partially protruding into the second bushing, so that to achieve an interference coupling between the first and second bushings, when the first bushing is inserted inside the second bushing. The same elastic lugs also partially protrude outside the second bushing, so that to achieve a coupling by interference to the seat of the tube, when the second bushing is inserted in the seat itself.

According to a possible aspect, the elastic element is arranged on the first bushing. In such case, the actuator element is preferably a protrusion of the second bushing, facing inside of the second bushing. The actuator element is configured so that the coupling between the actuator element and the elastic element brings the elastic element to the holding position, i.e. the coupling position to the tube.

According to a different possible aspect, the elastic element is arranged on the second bushing.

Preferably, the actuator element is a radial protrusion of the first bushing, facing outside of the first bushing. The actuator element is configured so that the coupling between the actuator element and the elastic element brings the elastic element to the releasing position.

According to a further possible aspect of the invention, the elastic element is instead configured as a spring with at least two protrusions constrained to one another at a first end and free at a second end opposed to the first end. The protrusions of the spring are arranged at rest at a first distance from one another and are configured so that, following the application of an outer force adapted to modify such first distance, at the removal of said outer force, the two protrusions tend to be arranged at the first distance from one another.

According to a possible aspect of the invention, the protrusions of the elastic element are skew to one another or arranged along incident lines, i.e. not parallel. In other words, the axes of the protrusions are not parallel. Typically, at least one of the protrusions has non-rectilinear axis. The distance between the two protrusions is thus preferably different if measured in at least two different points along the length of the protrusions, by considering to measure the distance at the same moment, or anyhow in the same condition of the elastic element (i.e. without deforming the elastic element between the two measurements).

An aspect of the present invention further concerns an assembly comprising a tube and a device according to one or more of the aspects set forth above.

According to a possible aspect, the assembly comprises the seat in which the tube can be at least partially inserted.

Still according to a further possible aspect of the invention, the seat comprises a housing for at least one protrusion of the spring, and the tube comprises a radial protrusion on the outer surface, i.e. a radial protrusion going towards the outside of the tube. The housing and the protrusions are configured so that the removal of the tube from the seat is prevented by the interference coupling between the protrusion of the spring and the radial protrusion of the tube, when a protrusion of the spring is inserted into the housing.

### BRIEF DESCRIPTION OF THE FIGURES

With reference to the figures attached, exemplary and non-limiting embodiments of the present invention are now discussed, in which:
- figure 1 is an exploded perspective view of an assembly provided with a device according to a first embodiment of the present invention;
- figure 2 is a sectional side and exploded view of the assembly of figure 1;
- figure 3 is a sectional side view of the assembly of figure 1, wherein the elastic device is in the tube releasing position;
- figure 4 is a sectional side view of the assembly of figure 1, wherein the elastic device is in a tube holding position;
- figure 5 is an exploded perspective view of an assembly provided with a device according to a second embodiment of the present invention;
- figure 6 is a sectional side and exploded view of the assembly of figure 5;
- figure 7 is a sectional side view of the assembly of figure 5, wherein the elastic device is in a tube holding position;
- figure 8 is a sectional side view of the assembly of figure 5, wherein the elastic device is in the tube releasing position;
- figure 9 is an exploded perspective view of an assembly provided with a device according to an embodiment not covered by the claimed invention;
- figures 10A - 10C are views of the assembly of figure 9, with the elastic device in a tube releasing position, wherein 10A is a cross-sectional view, 10B is a perspective view, 10C is a longitudinal section;
- figures 11A - 11C are views of the assembly of figure 9, with the elastic device in a tube holding position, wherein 11A is a cross-sectional view, 11B is a perspective view, 11C is a longitudinal section.

### DETAILED DESCRIPTION OF THE PRESENT INVENTION

A device 1, 10, 100 for connecting a tube 8, 80, 800 to a seat 9, 90, 900 comprises an elastic element 2, 20, 200 adapted to be coupled to the outer surface of the tube portion 8, 80, 800, in turn adapted to be inserted in the seat 2, 20, 200.

The elastic element 2, 20, 200 is alternatively displaceable into a tube holding position 8, 80, 800, in which the elastic element 2, 20, 200 prevents or hinders the removal of the tube from the seat 9, 90, 900, and into a tube releasing position 8, 80, 800, in which the elastic element 2, 20, 200 allows the removal of the tube from the seat.

The tube 8, 80, 800 is a common tube for a fluidic system, such as for example a gas system or a hydraulic system.

Preferably, the tube 8, 80, 800 is a tube of a fuel gas distribution system for domestic or civil use and is thus preferably a flexible tube, or anyhow somewhat elastically deformable, made of polymeric material for example.

The seat 9, 90, 900 has greater dimensions, in particular in the cross-section, than the tube 8, 80, 800, and in particular has a cavity 9a, 90a, 900a inside which a tube portion 8, 80, 800 can be inserted. Generally, at least part of the cavity 9a, 90a, 900a has a shape substantially complementary to the tube portion 8, 80, 800 adapted to be inserted inside the cavity 9a, 90a, 900a itself. Typically, at least part of the cavity 9a, 90a, 900a has inner diameter D2 substantially equal to or greater than the outer diameter D1 of the tube 8, 80, 800. The cavity 9a, 90a, 900a typically has an element 9b, 90b, 900b adapted to act as a limit stop for the tube 8, 80, 800 inside the cavity 9a, 90a, 900a, for example a shoulder or flange, or a similar element.

In a preferred embodiment, the cavity 9a, 90a, 900a is a portion of a gas burner tap, preferably of the domestic type and even more preferably of the type used for domestic cooking appliances.

A gasket 11 is preferably inserted in the cavity 9a, 90a, 900a, so that to be interposed between the seat 9, 90, 900 and tube 8, 80, 800, so that to achieve a fluidic tightness between the two elements. The gasket 11 is typically of the O-ring type, or similar element.

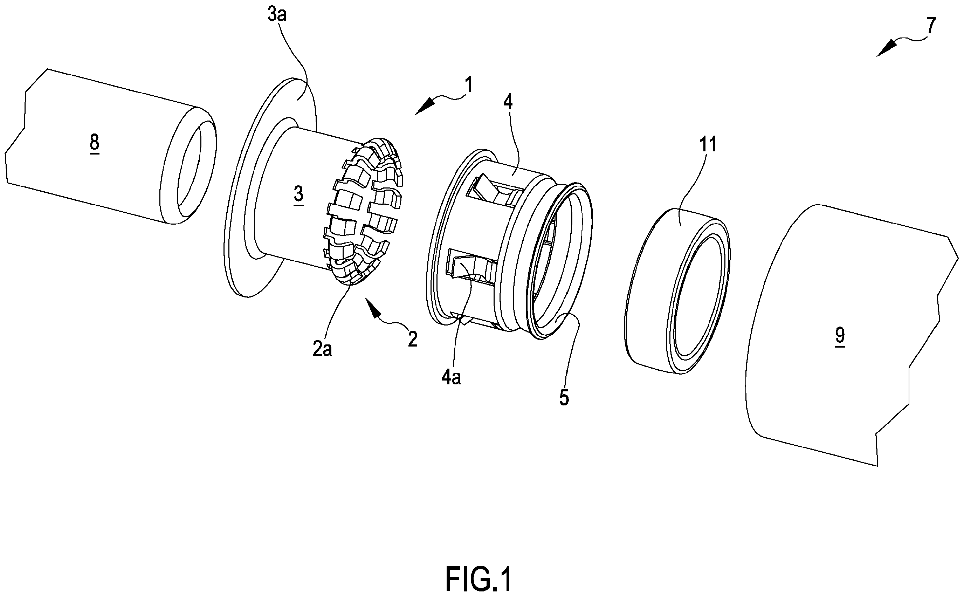

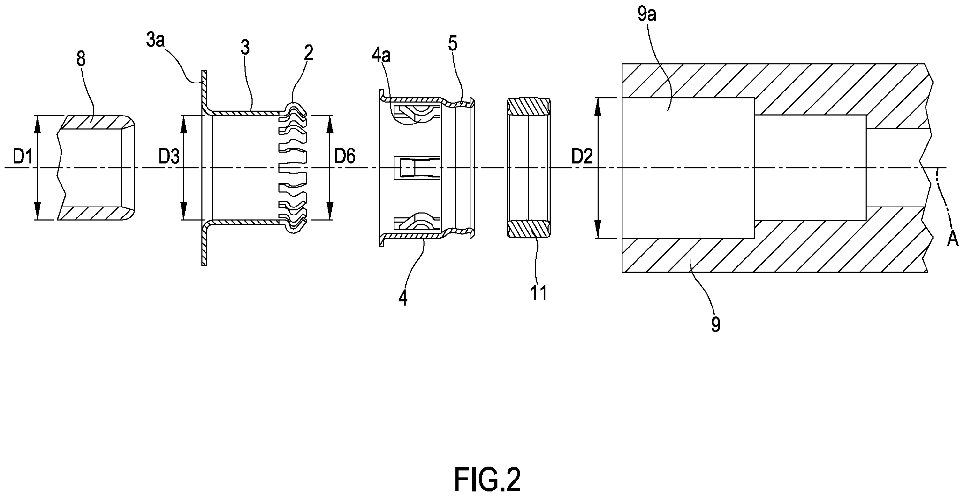

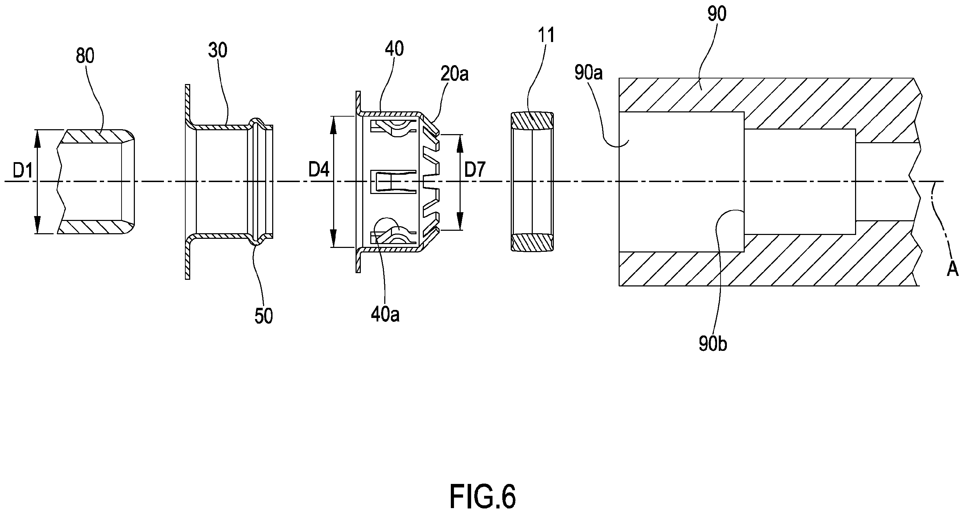

According to the invention, such as for example shown in the embodiments of figures 1 - 8, the device 1, 10 comprises a first bushing 3, 30 and a second bushing 4, 40.

The first bushing 3, 30 is couplable to the tube 8, 80 and thus typically has an inner diameter D3 substantially equal to the outer diameter D1 of the tube 8, 80.

The second bushing 4, 40 typically has a shape at least partially complementary to the first bushing 3, 30, so that the first bushing 3, 30 can be inserted (at least partially) into the second bushing 4, 40 and constrained thereto.

As better discussed hereunder, the elastic element 2, 20 is typically made on one of the two bushings, while the other bushing comprises an actuator element 5, 50 of the elastic element 2, 20. Such actuator element 5, 50 is configured so that the movement of the first bushing 3, 30 within the second bushing 4, 40 alternatively causes the engagement and disengagement between the elastic element 2, 20 and the actuator element 5, 50, so that to alternatively arrange the elastic element 2, 20 in the mentioned holding and releasing positions of the tube 8, 80.

The elastic element 2, 20 is typically arranged at an end of the respective bushing 3, 30, 4, 40.

The first bushing 3, 30 typically comprises a flange 3a, 30a at one of the ends, so that to prevent the first bushing 3, 30 from completely going through the second bushing 4, 40. If the elastic element 2, 20 is on the first bushing 3, 30, the flange 3a, 30a is arranged distal with respect to the elastic element 2, 20.

The second bushing 4, 40 typically comprises a coupling element 4a, 40a adapted to allow to constrain the bushings 3, 30, 4, 40 to one another.

The coupling element 4a, 40a is preferably an elastic element adapted to couple by interference to the first bushing 3, 30 when the latter is inserted inside the second bushing 4, 40, so that to hold it (reversibly) therein.

According to a preferred aspect shown in the figures, the coupling element 4a, 40a is configured as elastic lugs with a portion protruding inside the second bushing 4, 40.

Typically, the lugs further comprise a portion (typically at the free end thereof) protruding outside the second bushing 4, 40, so that the lugs 4a, 40a couple by interference to the seat 9, 90 so that to reversibly constrain the second bushing 4, 40 thereto, when the second bushing 4, 40 is inserted in the seat 9, 90.

The lugs 4a, 40 are thus typically shaped like folded foils, with at least a first portion protruding inside the bushing, and a second portion, distinct from the first portion, protruding outside the bushing. Typically, one between the first portion and the second portion is arranged at the free end of the lug, while the other portion is arranged at a curved zone of the lug, positioned between the free end of the lug and the end of the lug constrained to the bushing.

According to a preferred aspect of the invention, the elastic element 2, 20 comprises a plurality of teeth 2a, 20a arranged so that to be coupled to the tube 8, 80 by interference in the mentioned holding position.

The teeth 2a, 20a are preferably arranged along the perimeter of an end of a bushing 3, 30, 4, 40.

According to a possible aspect shown for example in figures 1 - 4, the elastic element 2 is placed on the first bushing 3.

As described above, the elastic element 2 is preferably made by a plurality of teeth 2a typically placed at an end of the first bushing 3. The teeth 2a are typically arranged along the entire perimeter of the section of the first bushing 3, i.e. typically form a crown of teeth. The elastic element 2 is typically arranged on the first bushing 3 so that to be able to be elastically deformable in a radial direction with respect to the axis A of the first bushing 3. Such axis A typically coincides (in use condition) with the axis of the tube 8, with the axis of the second bushing 4, and with the axis of the seat 9. The elastic element 2 is preferably shaped so that, at rest (i.e. in the absence of deformations), the elastic element 2 is in releasing position of the tube 8. In other words, the elastic element 2 has to be deformed so that to arrange it in the holding position of the tube 8. Once the deformation has been removed, the elastic element 2 returns to the releasing position of the tube 8. The elastic element 2 is thus typically arranged so that, at rest, the inner diameter D6 defined by the teeth 2a is substantially equal to or greater than the inner diameter (measured at a distance from, i.e. not at, the teeth 2a) D3 of the first bushing 3, i.e. substantially equal to or greater than the outer diameter D1 of the tube 8.

The actuator element 5 is thus arranged on the second bushing 4. As discussed, the actuator element 5 is shaped so that to elastically deform the elastic element 2.

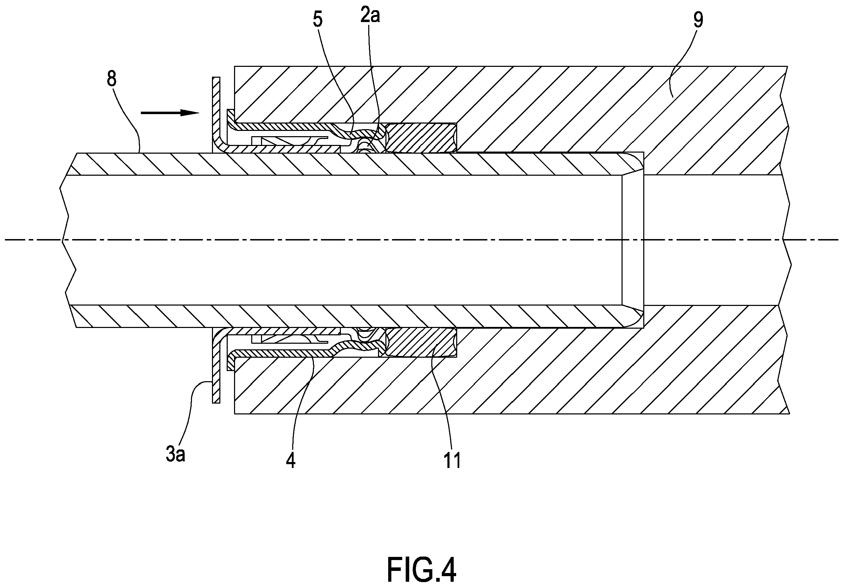

According to a preferred aspect of this invention, as shown in figures 1-4, the actuator element 5 is a portion of the inner surface of the second bushing 4. Such portion is curved or angled (i.e. with a non-constant diameter). The actuator element 5 thus defines a reduced diameter portion of the second bushing 4 so that, when the first bushing 3 is inserted inside the second bushing 4 and the elastic element 2 reaches the actuator element 5 (as shown in figure 4), the elastic element 2 is compressed, i.e. radially deformed in centripetal direction (considering, for example, the axis A of the first bushing 3).

Thus, when the first bushing 3 reaches its limit stop inside the second bushing 4, the elastic element 2 reaches the actuator element 5, which deforms the elastic element 2 so that to bring it to the holding position.

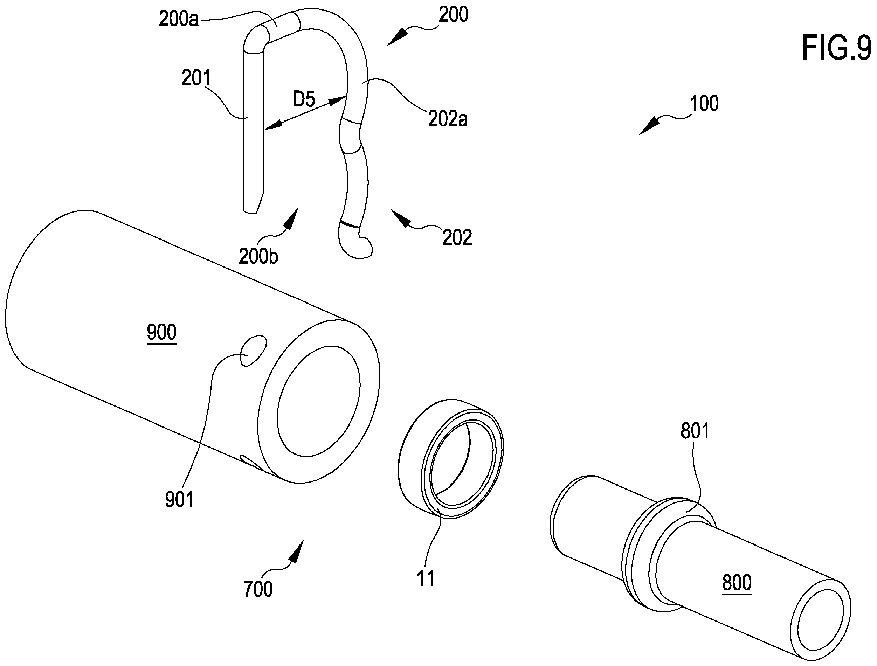

According to a possible aspect, the tube 8 can have a radial protrusion (not shown in detail, but similar to the radial protrusion 801 of the embodiment of figures 9 - 11C, better discussed hereunder), which protrudes outside the tube itself, so that to cooperate with the flange 3a of the first bushing 3. More in detail, when the tube 8 is coupled to the device 1 and inserted in the seat 9, the tube 8, thanks to the respective protrusion, can push the first bushing 3 inside the second bushing 4, such as to bring the elastic element 2 at the actuator element 5 and thus in the holding position of the tube 8.

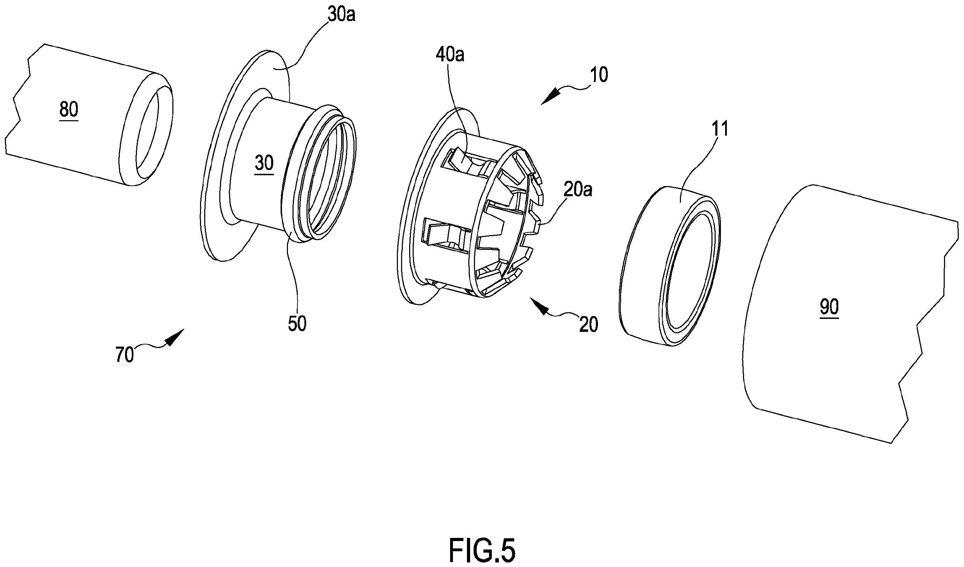

When the tube 8 is inserted in the seat 9, such tube 8 is held or is removable (i.e. "releasable") depending on the position of the elastic element 2. It should be noted that, for example in embodiments similar to that of figures 1-4, the holding position prevents or hinders (at least partially) the movement of the tube 8 in the seat 9. Thus, when the tube 8 has to be inserted in the seat 9, the elastic element 2 is preferably held in the releasing position, such as not to interfere with the movement of the tube 8 itself. According to a different aspect shown for example in figures 5 - 8, the elastic element 20 is made on the second bushing 40.

Preferably, the elastic element 20 comprises a plurality of teeth 20a which, according to a preferred aspect, are arranged at an end of the second bushing 40.

The elastic element 20 is preferably shaped so that, at rest (i.e. in the absence of deformations), such elastic element 20 is in the holding position of the tube 80. In other words, the elastic element 20 must be deformed to be arranged in the releasing position of the tube 80. Once the deformation has been removed, the elastic element 20 returns to the holding position of the tube 80. The elastic element 20 is thus typically arranged so that, at rest, the inner diameter D7 defined by the elastic element 20 (typically by the teeth 20a) is smaller than the inner diameter D4 (measured at a distance from, i.e. not at, the elastic element 20) of the second bushing 40, i.e. smaller than the outer diameter D1 of the tube 8.

The actuator element 50 is thus typically arranged on the first bushing 30. As discussed, the actuator element 50 is shaped so that to elastically deform the elastic element 20.

According to a possible aspect of the invention, as shown in figures 5 - 8, the actuator element 50 is a radial protrusion protruding outwardly with respect to the first bushing 30.

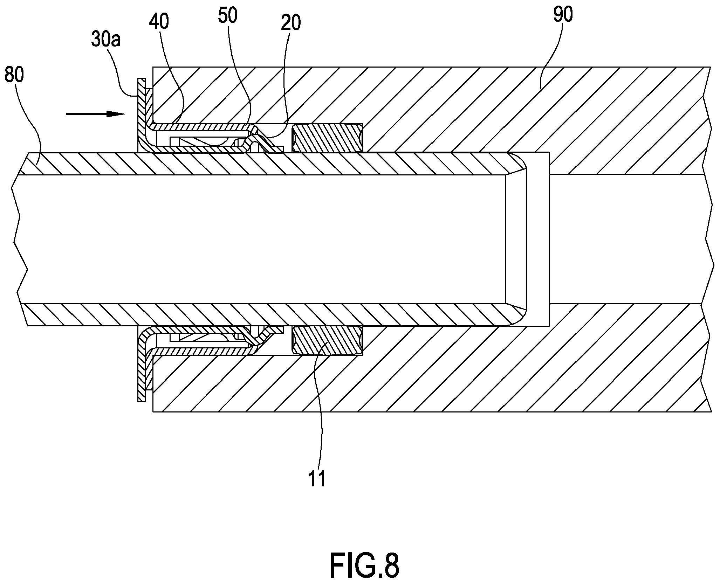

The actuator element 50 thus defines an increased diameter portion of the first bushing 30 so that, when the first bushing 30 is inserted inside the second bushing 40 and the actuator element 50 reaches the elastic element 20 (as shown in figure 8), the elastic element 2 is enlarged, i.e. radially deformed, in centrifugal direction (considering, for example, the axis A of the first bushing 30 when it is inserted inside the second bushing 40).

Thus, when the first bushing 30 reaches its limit stop inside the second bushing 40, the actuator element 50 reaches the elastic element 20, thus deforming it so that to bring it to the releasing position of the tube 80.

The teeth 20a are preferably angled with respect to the direction radial to the axis A, and are in particular angled so that to be facing, in use, the seat 90. This way, when the tube is inserted inside the second bushing 40 (in a direction, in use, results in the tube moving closer to the seat 9), the movement of the tube 80 with respect to the bushing deforms the teeth 20a so that to increase the inner diameter defined by the teeth 20a. This way, although the teeth 20a exert some pressure against the tube 80, the insertion of the tube 80 inside the second bushing 40 is not excessively complex. On the contrary, a movement of the tube 80 in the opposite direction, i.e. a movement of the tube 80 along a direction, in use, results in the tube moving away from the seat 90, causes - by friction and/or interference of the parts - a deformation of the teeth 20a such as to decrease the inner diameter defined by the teeth 20a, i.e. compresses the teeth 20a against the tube 80, so that to increase the force exerted by the teeth 20a against the tube 80, thus retaining it. The operation of the elastic element 20 is thus similar to that of a non-return valve.

Thus, in short, it is not necessary to couple the actuator element 50 to the elastic element 20 in order to insert the tube 80 in the second bushing 40. On the contrary, to remove the tube 80, the actuator element 50 must be operated so that to move the teeth 20a away from the tube 80.

It should be noted that, for coherence, the tube and the seat were denoted by numerical references in figures 5 - 8 different from to the embodiment of figures 1 - 4. Despite this, the same tube 8, 80 can be inserted in the same seat 9, 90 both with the device 1 of figures 1 - 4 and with the device 10 of figures 5 - 8, i.e. with an elastic element 2, 20 that can be made on the first or second bushing.

According to an embodiment not covered by the claimed invention, as for example in the embodiment of figures 9 - 11C, the elastic device 200 is configured as a spring with at least two protrusions 201, 202 constrained to one another at a first end 200a of the elastic device 200 and free at a second end 200b opposed to the first end 200a. The protrusions 201, 202 are arranged, at rest, at a first distance D5 from one another, and are configured so that, following the application of an outer force adapted to modify the first distance D5, at the removal of such outer force the two protrusions 201, 202 tend to rearrange themselves at said first distance. In other words, the protrusions 201, 202 form the elastic part of the elastic element 200 and are elastically deformable when moving closer or away from one another.

Preferably, the protrusions 201, 202 are skew, i.e. are not parallel to one another. Therefore, according to a particular aspect, the elastic element 200 can substantially be "U-shaped," wherein the "legs" of the "U" can be non-parallel to one another. According to a possible aspect, at least one of the protrusions 201, 202 of the elastic element 200 is at least partially curved or angled in shape. In other words, at least one portion of at least one of the protrusions 201, 202 is not rectilinear.

Typically, the second protrusion 202, i.e. the one adapted to be constrained outside of the seat 900, is partially curved or angled in shape.

According to a possible aspect, the first protrusion 201 is substantially rectilinear. The seat 900 typically comprises a housing 901 for the first protrusion 201 of the elastic element 200.

The housing 901 is incident to the cavity 900a of the seat 900. In other words, the housing 901 communicates with the cavity 900a of the seat 900.

Thus, when the first protrusion 201 of the elastic element is inserted (for its whole possible travel) inside the housing 900, a part of the first protrusion 201 of the elastic element 200 occupies the cavity 900a, thus reducing the space available for the sliding of the tube 800 inside the cavity 900a itself.

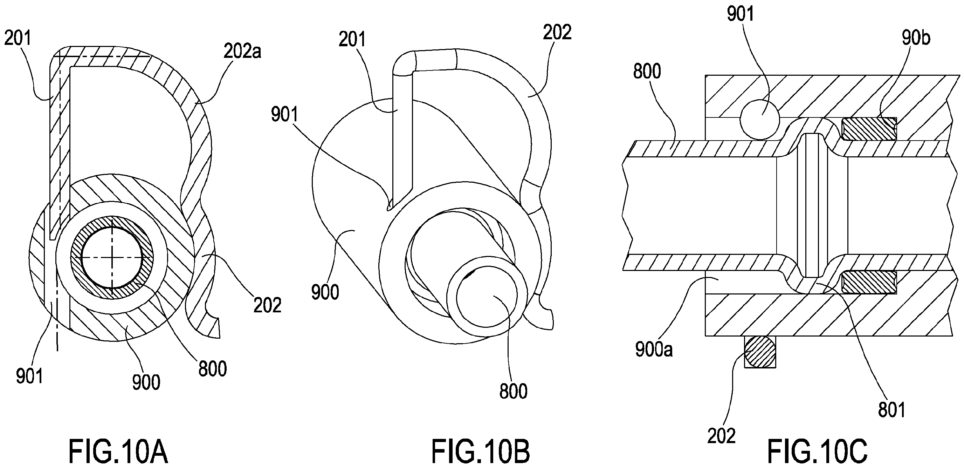

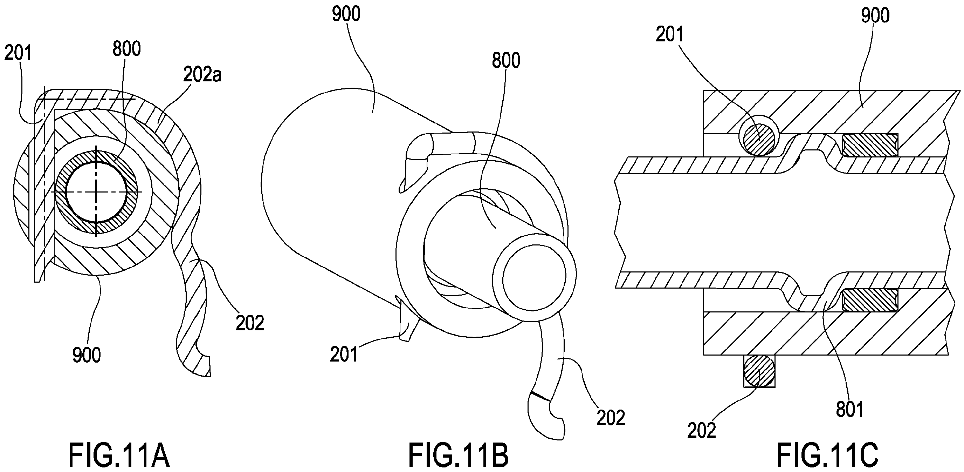

The tube 800 has a radial protrusion 801 on its outer surface, i.e. a portion having an increased outer diameter. If the first protrusion 201 of the elastic element is inserted inside the housing 900 such as to partially occupy the cavity 900a, the interference between the protrusion 801 of the tube 800 and the first protrusion 201 of the elastic element 200 does not allow the tube 800 to move freely inside the seat 900. In other words, the movement of the tube 800 is blocked by the contact between the protrusion 801 of the tube 800 itself and the first protrusion 201 of the elastic element 200. In other words, as shown in figure 10C, when the housing 901 is free, the tube 800 is allowed to move freely inside the seat 900. Instead, when, as shown in figure 11C, the first protrusion is inserted inside the housing 901 such as to occupy part of the cavity 900a, the movement between the tube 800 and the seat 900 is blocked by the presence of the first protrusion 201 of the elastic element 200 inside the cavity 900a.

The second protrusion 202 typically has an arched portion 202a, substantially shaped complementary to the outer surface of the seat 900, so that to be constrained elastically to the seat 900 (i.e. to clamp the same).

It should be noted how the seat 900 provided with the housing 901 can be used with the tube 800 described above, also with the device 1 or 10 of the preceding embodiments.

An assembly 7, 70, 700 comprising a device 1, 10, 100 according to one or more of the aspects described above, and at least one between the respective tube 8, 80, 800 and the respective seat 9, 90, 900.

A gasket 11 is typically arranged in the seat 9, 90, 900 so that to ensure the fluidic tightness between the tube 8, 80, 800 and seat 9, 90, 900.

In use, the tube 8, 80, 800 is inserted in the seat 9, 90, 900 and the elastic element 2, 20, 200 is arranged in the holding position, so that to prevent, or anyhow hinder, the removal of the tube 8, 80, 800 from the seat 9, 90, 900.

By arranging the elastic element 2, 20, 200 in the releasing position, it is possible to draw out the tube 8, 80, 800 from the seat 9, 90, 900.

According to a possible aspect, as previously described, the device 1 comprises two bushings 3, 30, 4, 40.

In such case, the first bushing 3, 30 is inserted inside the second bushing 4, 40. The first bushing 3, 30 is constrained to the second bushing 4, 40, and the second bushing 4, 40 is in turn constrained to the seat 9, 90. Preferably, an elastic coupling element 4a, 40a allows to constrain the bushings 3, 30, 4, 40 to one another and to also preferably constrain the second bushing 4, 40 to the seat 9, 90. With reference to the example of the embodiment shown herein, the coupling element 4a, 40a is configured as elastic lugs with a portion protruding into the second bushing 4, 40, so that to couple by interference to the first bushing 3, 30 and a portion protruding outside the second bushing 4, 40 so that to couple by interference to the seat 9, 90.

Typically, the bushings 3, 30, 4, 40 are initially constrained to one another, to then constrain the tube 8, 80 to the couple of bushings 3, 30, 4, 40. However, the possibility to initially constrain the first bushing 3, 30 to the tube 8, 80, to then subsequently constrain the second bushing 4, 40 to the first bushing 3, 30, is not excluded. Similarly, the bushings 3, 30, 4, 40 and the tube 8, 80 are typically coupled to one another before being inserted in the seat 9, 90. It is however possible to constrain the bushings 3, 30, 4, 40 to the seat 9, 90, to then subsequently insert the tube 8, 80 inside the bushings 3, 30, 4, 40.

According to a possible aspect shown for example in figures 1-4, the elastic element 2 is arranged on the first bushing 3, and the second bushing 4 has an actuator element 5.

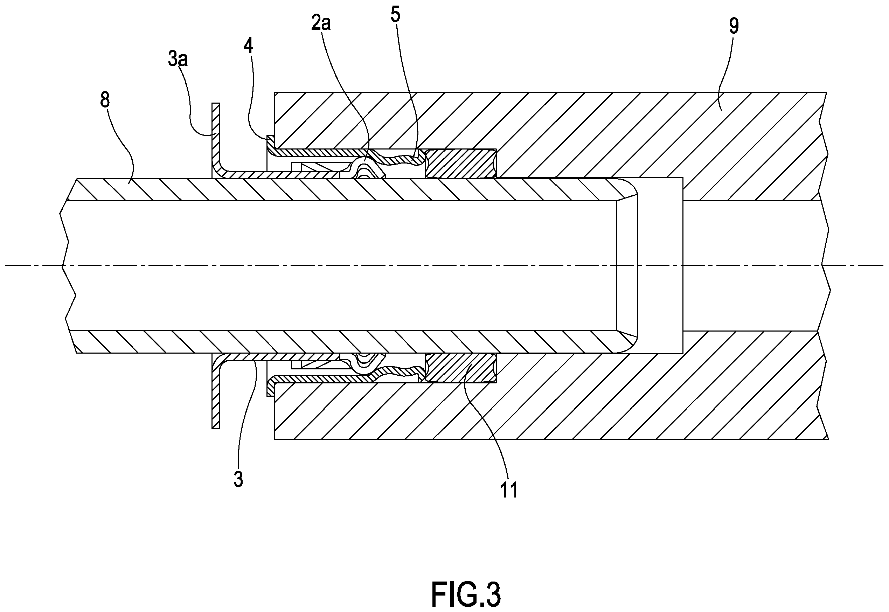

Thus, the bushings 3, 4 are constrained to one another to constrain the tube 8 to the seat 9. The first bushing 3 is only partially inserted inside the second bushing 4, so that the elastic element 2 does not encounter the actuator element 5. In fact, in such position, the elastic element 2 is not compressed and allows to easily move the tube 8 inside the first bushing 3. Once the tube 8 is inserted in the bushings 3, 4, it is inserted in the seat 9. The coupling element 4a couples by interference to the seat 9, so that to hinder the removal of the second bushing 4 (and thus of the assembly of bushings 3, 4 and tube 8) from the seat 9, as shown for example in figure 3. In such condition, the elastic element 2 is still in the releasing position. By further pushing the first bushing 3 inside the second bushing 4, the elastic element 2 encounters the actuator element 5 and is thus compressed against the tube 8 so that to be arranged in the holding position of the tube 8 itself.

In order to remove the tube 8, the first bushing 3 must initially be backed away with respect to the second bushing 4, so that to bring the elastic element 2 to the releasing position, for example by rearranging it in the condition of figure 3. In such case, the tube 8 is no longer held by the elastic element 2 and can be easily removed from the seat 9.

According to a possible aspect shown for example in figures 5 - 8, the elastic element 20 is arranged on the second bushing 40 and the first bushing 30 has an actuator element 50.

Thus, the bushings 30, 40 are constrained to one another to constrain the tube 80 to the seat 90. The first bushing 30 is only partially inserted inside the second bushing 40, so that the actuator element 50 does not encounter the elastic element 20. In such position, the elastic element 20 is typically in the holding position. However, as discussed above, in such condition the insertion of the tube 80 inside the bushings 30, 40 is typically allowed, whereas its removal is hindered.

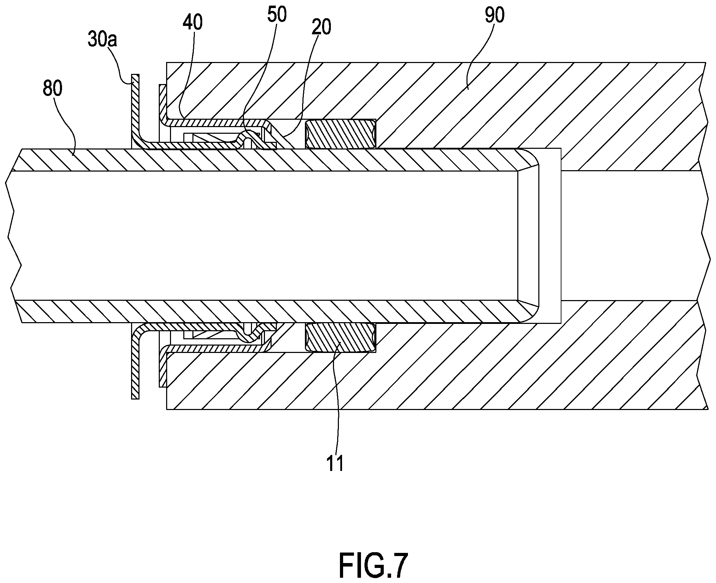

Once the tube 80 is inserted in the bushings 30, 40, it is inserted in the seat 90. The coupling element 40a couples by interference to the seat 90, so that to hinder the removal of the second bushing 40 (and thus of the assembly of bushings 30, 40 and tube 80) from the seat 90, as shown for example in figure 7. In such condition, the elastic element 20 is in the holding position and hinders the removal of the tube 80. In order to remove the tube 80, the first bushing 30 must be pushed inside the second bushing 40, so that to couple the actuator element 50 to the elastic element 20 and to thus bring the elastic element 20 to the releasing position, such as for example shown in figure 8.

In such condition, the tube 80 is no longer held by the elastic element 20 and can be easily removed from the seat 90.

According to an embodiment not covered by the claimed invention, shown for example in figures 9 - 11C, the elastic element 200 is configured as a spring provided with two protrusions 201, 202.

Thus, the tube 800 is initially inserted in the seat 900 to constrain the tube 800 to the seat 900.

In such condition, the first protrusion 201 of the elastic element is only partially inserted in the housing 901 (or is completely outside of it), such as not to interfere with the movement of the tube 800 in the seat 900 (and in particular with the radial protrusion 801 of the tube 800).

In such position, the elastic element 200 is thus in the releasing position, such as for example shown in figures 10A - 10C.

Once the tube 800 is inserted in the seat 900, it is possible to arrange the first protrusion 201 inside the housing 901 for its entire travel. The first protrusion 201 is thus also partially inserted inside the cavity 900a in which the tube 800 is inserted, thus preventing the removal thereof. In fact, as previously discussed, the removal of the tube 800 is blocked by the coupling between the radial protrusion 801 of the tube 800 and the first protrusion 201 of the elastic element 200.

The second protrusion 202 of the elastic element is elastically deformed by the outer surface of the seat 900, so that the elastic element clamps the seat 900. This allows the elastic element 200 to stay in the holding position also when, for example, the tube 800 is rotated so that the force of gravity acting on the elastic element 2 is oriented for the removal of the first protrusion 201 from the housing 901.

In general, the coupling between the second protrusion 202 of the elastic element 200 and the seat 900 is such as to prevent an accidental removal of the first protrusion 201 from the housing 901.

The elastic element 200 must thus be removed from the seat 900 in order to remove the tube 800. In particular, such as for example in the embodiment shown, the first protrusion 201 must be removed from the respective housing 901 of the seat 900. Once the seat 900 has been cleared, it is possible to remove the tube 800 without a possibility for the radial protrusion 801 of the tube 800 to encounter obstacles along its path.

## Claims

1. Device (1; 10) comprising a first bushing (3; 30) and a second bushing (4;40) for connecting a tube (8; 80) having an outer diameter (D1) substantially equal to the inner diameter (D3) of said first bushing (3; 30) to a seat (9; 90), by inserting at least a portion of the tube (8; 80) in the seat (9; 90), the device comprising an elastic element (2; 20) adapted to be coupled to the outer surface of the tube portion (8; 80) adapted to be inserted in the seat (9; 90), the elastic element (2; 20) being alternatively displaceable at least into:
• a tube (8; 80) holding position, in which the elastic element (2; 20) prevents or hinders the removal of the tube (8; 80) from the seat (9; 90);
• a tube (8; 80) releasing position, in which the elastic element (2; 20) allows the removal of the tube (8; 80) from the seat (9; 90),
wherein the first bushing (3; 30) is couplable with the tube (8; 80) and it is couplable to the second bushing (4; 40) by at least partially inserting the first bushing (3; 30) inside the second bushing (4; 40), wherein one bushing of said first and second bushings (3, 4; 30, 40) comprises said elastic element (2; 20), while the other bushing (4, 3; 40, 30) of said first and second bushings comprises an actuator element (5; 50) actuating said elastic element (2; 20), configured so that the movement of the first bushing (3; 30) within the second bushing (4; 40) alternatively causes the engagement and disengagement between said elastic element (2; 20) and said actuator element (5; 50), so that to alternatively define said holding position and said releasing position depending on the relative position between said first bushing (3; 30) and said second bushing (4; 40), wherein said second bushing (4; 40) comprises a coupling element (4a; 40a), preferably elastic, which at least partially protrudes into said second bushing (4; 40), so that to achieve an interference coupling between said first bushing (3; 30) and said second bushing (4; 40), when the first bushing (3; 30) is inserted in the second bushing (4; 40), **characterised in that** said coupling element (4a, 40a) is configured as elastic lugs, with a portion protruding into the second bushing (4, 40), wherein said elastic lugs comprise a further portion, preferably at a free end thereof, protruding outside the second bushing (4, 40), so that when the second bushing (4, 40) is inserted in the seat (9, 90), the lugs (4a, 40a) are couplable by interference to the seat (9, 90), so that to reversibly constrain the second bushing (4, 40) to the seat (9, 90).

2. Device (1; 10) according to claim 1, wherein said elastic element (2; 20) comprises a plurality of teeth (2a; 20a) arranged so that to be coupled to said tube (8; 80) by interference in said holding position.

3. Device (1) according to claim 1 or 2, wherein said elastic element (2) is arranged on said first bushing (3).

4. Device (1) according to claim 3, wherein said actuator element (5) is a reduced-diameter portion of said second bushing (4), said actuator element (5) being configured so that the coupling between said actuator element (5) and said elastic element (2) bring said elastic element (2) in said holding position.

5. Device (10) according to any preceding claim , wherein said elastic element (20) is arranged on said second bushing (40).

6. Device (10) according to claim 5, wherein said actuator element (50) is a radial protrusion of said first bushing (30), facing outside of said first bushing (30), said actuator element (50) being configured so that the coupling between said actuator element (50) and said elastic element (20) brings said elastic element (20) in said releasing position.

7. Assembly (7; 70) comprising a device (1; 10) according to one of claims 1 to 6, and a tube (8; 80) adapted to be coupled with said device (1; 10), and/or a seat (9; 90) for a tube (8; 80) adapted to be coupled with said device (1; 10).

## Patentansprüche

1. Vorrichtung (1; 10) enthaltend eine erste Buchse (3; 30) und eine zweite Buchse (4; 40) zum Verbinden eines Rohrs (8; 80), dessen Außendurchmesser (D1) im Wesentlichen gleich dem Innendurchmesser (D3) der ersten Buchse ist (3; 30) mit einem Sitz (9, 90), durch Einführen mindestens eines Teils des Rohrs (8; 80) in den Sitz (9; 90), wobei die Vorrichtung ein elastisches Element (2; 20) umfasst, das angepasst ist, an die Außenfläche des Rohrabschnitts (8; 80) gekoppelt zu werden, der angepasst ist, in den Sitz (9; 90) eingesetzt zu werden, wobei das elastische Element (2; 20) wahlweise zumindest verschiebbar ist in:
• eine Halteposition des Rohres (8; 80), in der das elastische Element (2; 20) das Entfernen des Rohrs (8; 80) aus dem Sitz (9; 90) verhindert oder behindert;
• eine Freigabeposition des Rohrs (8; 80), in der das elastische Element (2; 20) das Entfernen des Rohrs (8; 80) aus dem Sitz (9; 90) ermöglicht,
wobei die erste Buchse (3; 30) mit dem Rohr (8; 80) gekoppelt werden kann und mit der zweiten Buchse (4; 40) gekoppelt werden kann, indem die erste Buchse (3; 30) zumindest teilweise in die zweite Buchse (4; 40) eingesetzt wird, wobei eine Buchse der ersten und der zweiten Buchsen (3, 4; 30, 40) das elastische Element (2; 20) umfasst, während die andere Buchse (4, 3; 40, 30) der ersten und der zweiten Buchsen ein Betätigungselement (5; 50) umfasst, das das elastische Element (2; 20) betätigt, so konfiguriert, dass die Bewegung der ersten Buchse (3; 30) innerhalb der zweiten Buchse (4; 40) abwechselnd den Eingriff und die Trennung zwischen dem elastischen Element (2; 20) und dem Betätigungselement (5; 50) bewirkt, um abwechselnd die Halteposition und die Freigabeposition abhängig von der relativen Stellung zwischen der ersten Buchse (3; 30) und der zweiten Buchse (4; 40) zu definieren; wobei die zweite Buchse (4; 40) ein vorzugsweise elastisches Kopplungselement (4a; 40a) umfasst, das zumindest teilweise in die zweite Buchse (4; 40) hineinragt, so dass eine Presskupplung zwischen der ersten Buchse (3; 30) und der zweiten Buchse (4; 40) erreicht wird, wenn die erste Buchse (3; 30) in die zweite Buchse (4; 40) eingesetzt wird,
**dadurch gekennzeichnet, dass** das Kopplungselement (4a, 40a) als elastische Laschen ausgebildet ist, wobei ein Abschnitt in die zweite Buchse (4, 40) hineinragt, wobei die elastischen Laschen einen weiteren Abschnitt umfassen, vorzugsweise an einem freien Ende davon, der aus der zweiten Buchse (4, 40) herausragt, so dass beim Einsetzen der zweiten Buchse (4, 40) in den Sitz (9, 90) die Laschen (4a, 40a) durch Pressung mit dem Sitz (9, 90) gekoppelt werden, so dass die zweite Buchse (4, 40) reversibel am Sitz (9, 90) befestigt wird.

2. Vorrichtung (1; 10) gemäß Anspruch 1, wobei das elastische Element (2; 20) eine Vielzahl von Zähnen (2a; 20a) umfasst, die so angeordnet sind, dass sie in der Halteposition durch Eingriff mit dem Rohr (8; 80) gekoppelt werden können.

3. Vorrichtung (1) gemäß Anspruch 1 oder 2, wobei das elastische Element (2) an der ersten Buchse (3) angeordnet ist.

4. Vorrichtung (1) gemäß Anspruch 3, wobei das Betätigungselement (5) ein Abschnitt mit verringertem Durchmesser der zweiten Buchse (4) ist, wobei das Betätigungselement (5) so konfiguriert ist, dass die Kopplung zwischen dem Betätigungselement (5) und dem elastischen Element (2) das elastische Element (2) in die Halteposition bringt.

5. Vorrichtung (10) gemäß irgendeinem der vorhergehenden Ansprüche, wobei das elastische Element (20) an der zweiten Buchse (40) angeordnet ist.

6. Vorrichtung (10) gemäß Anspruch 5, wobei das Betätigungselement (50) ein radialer Vorsprung der ersten Buchse (30) ist, der zur Außenseite der ersten Buchse (30) weist, wobei das Betätigungselement (50) so konfiguriert ist, dass die Kopplung zwischen dem Betätigungselement (50) und dem elastischen Element (20) das elastische Element (20) in die Freigabeposition bringt.

7. Baugruppe (7; 70), umfassend eine Vorrichtung (1; 10) gemäß einem der Ansprüche 1 bis 6 und ein Rohr (8; 80), das mit der Vorrichtung (1; 10) gekoppelt werden kann, und/oder einen Sitz (9; 90) für ein Rohr (8; 80), der mit der Vorrichtung (1; 10) gekoppelt werden kann.

## Revendications

1. Dispositif (1; 10) comprenant une première douille (3 ; 30) et une seconde douille (4 ; 40) pour relier un tube (8 ; 80) ayant un diamètre extérieur (D1) sensiblement égal au diamètre intérieur (D3) de ladite première douille (3 ; 30) à un siège (9 ; 90), en insérant au moins une partie du tube (8 ; 80) dans le siège (9 ; 90), le dispositif comprenant un élément élastique (2 ; 20) adapté pour être couplé à la surface extérieure de la partie de tube (8 ; 80) adaptée pour être insérée dans le siège (9 ; 90), l'élément élastique (2 ; 20) étant alternativement déplaçable au moins dans :
• une position de maintien de tube (8; 80), dans laquelle l'élément élastique (2 ; 20) empêche ou gêne le retrait du tube (8 ; 80) du siège (9 ; 90) ;
• une position de libération de tube (8 ; 80), dans laquelle l'élément élastique (2 ; 20) permet le retrait du tube (8 ; 80) du siège (9 ; 90),
dans lequel la première douille (3 ; 30) est couplée au tube (8 ; 80) et est couplée à la seconde douille (4 ; 40) en insérant au moins partiellement la première douille (3 ; 30) à l'intérieur de la seconde douille (4 ; 40), dans lequel une douille desdites première et seconde douilles (3, 4; 30, 40) comprend ledit élément élastique (2; 20), tandis que l'autre douille (4, 3 ; 40, 30) desdites première et seconde douilles comprend un élément d'actionnement (5 ; 50) actionnant ledit élément élastique (2 ; 20), configuré de telle sorte que le mouvement de la première douille (3 ; 30) à l'intérieur de la seconde douille (4 ; 40) provoque alternativement l'engagement et le désengagement entre ledit élément élastique (2 ; 20) et ledit élément d'actionnement (5 ; 50), de manière à définir alternativement ladite position de maintien et ladite position de libération en fonction de la position relative entre ladite première douille (3 ; 30) et ladite seconde douille (4 ; 40), dans lequel ladite seconde douille (4 ; 40) comprend un élément de couplage (4a ; 40a), de préférence élastique, qui fait au moins partiellement saillie dans ladite seconde douille (4 ; 40), de manière à réaliser un couplage par interférence entre ladite première douille (3 ; 30) et ladite seconde douille (4 ; 40), lorsque la première douille (3 ; 30) est insérée dans la seconde douille (4 ; 40), **caractérisé en ce que** ledit élément de couplage (4a, 40a) est configuré sous forme de pattes élastiques, avec une partie faisant saillie dans la seconde douille (4, 40), dans lequel lesdites pattes élastiques comprennent une autre partie, de préférence à une de leurs extrémités libres, faisant saillie à l'extérieur de la seconde douille (4, 40), de sorte que lorsque la seconde douille (4, 40) est insérée dans le siège (9, 90), les pattes (4a, 40a) sont couplées par interférence au siège (9, 90), de manière à contraindre de façon réversible la seconde douille (4, 40) au siège (9, 90).

2. Dispositif (1 ; 10) selon la revendication 1, dans lequel ledit élément élastique (2 ; 20) comprend une pluralité de dents (2a ; 20a) disposées de manière à être couplées audit tube (8 ; 80) par interférence dans ladite position de maintien.

3. Dispositif (1) selon la revendication 1 ou 2, dans lequel ledit élément élastique (2) est disposé sur ladite première douille (3).

4. Dispositif (1) selon la revendication 3, dans lequel ledit élément d'actionnement (5) est une partie à diamètre réduit de ladite seconde douille (4), ledit élément d'actionnement (5) étant configuré pour que le couplage entre ledit élément d'actionnement (5) et ledit élément élastique (2) amène ledit élément élastique (2) dans ladite position de maintien.

5. Dispositif (10) selon l'une quelconque des revendications précédentes, dans lequel ledit élément élastique (20) est disposé sur ladite seconde douille (40).

6. Dispositif (10) selon la revendication 5, dans lequel ledit élément d'actionnement (50) est une saillie radiale de ladite première douille (30), tournée vers l'extérieur de ladite première douille (30), ledit élément d'actionnement (50) étant configuré pour que le couplage entre ledit élément d'actionnement (50) et ledit élément élastique (20) amène ledit élément élastique (20) dans ladite position de libération.

7. Ensemble (7 ; 70) comprenant un dispositif (1 ; 10) selon l'une quelconque des revendications 1 à 6, et un tube (8 ; 80) apte à être couplé avec ledit dispositif (1 ; 10), et/ou un siège (9 ; 90) pour un tube (8 ; 80) apte à être couplé avec ledit dispositif (1 ; 10).
